# EUROPEAN PATENT APPLICATION

(11) **EP 1 248 451 A1**
(43) Date of publication of application: **09.10.2002**
(21) Application number: 01303128.1
(22) Date of filing: 02.04.2001
(51) Int. Cl.: H04M 3/54, H04M 3/533

(54) **System and method to transfer a phone call to a voice mail system using the keypad**

(71) Applicant: LUCENT TECHNOLOGIES INC., Murray Hill, New Jersey 07974-0636 (US)
(72) Inventor: Kroon, Adrianus, 3632 XG Loenen aan de Vecht (NL)
(74) Representative: Sarup, David Alexander

(57) **Abstract**

Telecommunications system (1) including network switch (2), a voice mail system (3), telephones (4,5); the voice mail system (3) arranged to register messages from incoming phone calls in a mailbox (6) of a telephone (4); the network switch (2) arranged to forward an incoming call to the mailbox (6), before speech phase for the incoming call; wherein
the telephone device (4) generates a control signal by entering a code on the keypad or depressing a functoin key for transferring the incoming call to the voice mail system (3) during speech phase;
the network switch (2) tranfers the incoming call to the mailbox (6) during speech phase by:

- monitoring the occurrence of the control signal;
- upon receiving the control signal:
   - extracting call information about the telephone (4) from the control signal to ensure that the voicemail message is stored in the correct voicemail box;
   - disconnecting the incoming call from the telephone (4);
   - transmitting the call information to the voice mail system (3);
   - redirecting the incoming call to the mailbox (6).

## Description

### Field of the invention

The present invention relates to a system and method for forwarding a phone call to a voice mail system, as defined in the preamble of claim 1 and claim 5, respectively.

### Prior art

In public and private telephone networks, facilities exist to forward an incoming phone call for a subscriber of the network. The network switch to which the called subscriber is connected, may use such forwarding facilities to forward a call to a voice mail system which is also connected to that particular network switch or to another destination than the subscriber's phone.

The redirection to the voice mail system can be activated by the called subscriber for recording telephone messages from callers. Optionally, the voice mail system may record messages from a calling party while the called subscriber does not reply (e.g., when he has switched off his mobile telephone), or is busy answering another phone call. Also, the called subscriber may instruct the network switch to redirect all calls unconditionally to the voice mail system. Such explicit call forwarding (on the conditions as described above: no reply, while busy, and unconditionally) will take place without an actual contact of the calling party and the called party.

In some cases, when, for example, a number of workers share a working space, explicit call forwarding to a voice mail system as described above, may not be the best solution. In the absence of one of the workers, another worker may want to answer the incoming calls for the absent worker. For instance, some calls may be answered by one of the other workers, when the calling party has a general question. Some messages may have to be answered urgently; a direct reply may be needed. Also, when explicit call forwarding to a voice mail system is enabled, some callers repeatedly try to contact the absent worker, but do not want to use the voice mail system. Thus, the telephone of the absent worker may ring many times without actually receiving a message on the voice mail system. Other callers may call the absent worker repeatedly because they want to ensure the absent worker receives their message. Alternatively, some phone calls may still need to be answered by the absent worker at a later time, because e.g., these messages are private, can only be answered by the absent worker, or, are simply not urgent. In the latter case, call forwarding to the voice mail system is clearly necessary, and the answering party may want to redirect the call to the voice mail system.

However, redirecting a phone call for a subscriber to the voice mailbox of that subscriber may be complicated, once the phone call has been answered (the call is in "speech phase"). From the prior art it is known that redirection may be done when a "call forwarding on busy" option for the subscriber's phone is enabled. The answering party can then redirect the call of the calling party, by first putting the calling party on "hold", and then calling the telephone number of the subscriber. Since the number is busy, the call will be forwarded by the network switch to the voice mail system. Finally, the answering party must hand over the calling party to the voice mail system. Now the calling party can use the voice mail system to leave a message. This procedure is rather complicated, and not very user-friendly to both the answering party and the calling party. Also, this procedure is possible only when a "call forwarding on busy" option is available and enabled.

### Summary of the invention

It is an object of the present invention to provide a system and method to forward a phone call to a voice mail system which allows a simpler way to forward an incoming phone call to the voice mail system during speech phase. To achieve this object, the present invention relates to a telecommunications system comprising a network switch, a voice mail system, a plurality of telephone devices, the network switch being arranged to communicate with the plurality of telephone devices, the voice mail system, and other network switches; the network switch being arranged to switch incoming and outgoing phone calls; the voice mail system being arranged to register messages from incoming phone calls in a mailbox related to a specific telephone device of the plurality of telephone devices if a call forwarding option is enabled on the telephone device; the network switch being arranged to forward an incoming phone call for the telephone device to the voice mail system, before entering a speech phase for the incoming phone call with the telephone device, if the call forwarding option is enabled; characterised in that the telephone device is arranged to generate a control signal for forwarding the incoming phone call for the telephone device to the voice mail system during the speech phase of the incoming phone call with the telephone device; the network switch is arranged to forward the incoming phone call for the telephone device to the voice mail system during the speech phase by carrying out the following steps:
- to monitor during the speech phase the occurrence of the control signal for forwarding the incoming phone call for the telephone device to the voice mail system;
- upon reception of the control signal:
   - to extract information about the identity of the telephone device from the control signal;
   - to disconnect the incoming phone call from the telephone device;
   - to transmit a signal to the voice mail system comprising the information about the identity of the telephone device; and
   - to redirect the incoming phone call to the mailbox related to the telephone device, using the information about the identity of the telephone device.

Also, the present invention relates to method to forward an incoming phone call to a voice mail system in a telecommunications system as described above, characterised in that the method comprises the following steps:
- to generate by the telephone device during the speech phase of the incoming phone call, a control signal for forwarding the incoming phone call for the telephone device to the voice mail system ;
- to forward by the network switch the incoming phone call for the telephone device to the voice mail system during the speech phase in accordance to the following steps:
   - to monitor during the speech phase the occurrence of the control signal for forwarding the incoming phone call for the telephone device to the voice mail system ;
   - upon reception of the control signal:
- to extract information about the identity of the telephone device from the control signal;
- to disconnect the incoming phone call from the telephone device ;
- to transmit a signal to the voice mail system comprising the information about the identity of the telephone device ; and
- to redirect the incoming phone call to the mailbox related to the telephone device , using the information about the identity of the telephone device .

Moreover, the present invention relates to a network switch for a telecommunications system as described above, characterised in that the network switch is arranged to forward the incoming phone call for the telephone device to the voice mail system during the speech phase by carrying out the following steps:
- to monitor during the speech phase the occurrence of the control signal for forwarding the incoming phone call for the telephone device to the voice mail system ;
- upon reception of the control signal:
   - to extract information about the identity of the telephone device from the control signal;
   - to disconnect the incoming phone call from the telephone device ;
   - to transmit a signal to the voice mail system comprising the information about the identity of the telephone device ; and
   - to redirect the incoming phone call to the mailbox related to the telephone device , using the information about the identity of the telephone device .

### Brief description of the drawings

In the following, the invention will be explained with reference to some drawings. These drawings are intended for illustration purposes only and not to limit the scope of protection which is defined in the accompanying claims.
Figure 1 shows a schematic layout of a telephone network in which the system and method of the present invention are implemented;
Figure 2 shows a schematic flow diagram of a procedure to be carried out by the network switch to forward a phone call to a voice mail system during speech phase;
Figure 3 shows a schematic signalling flow to illustrate the method of the present invention in an embodiment using the implementation with ISDN messages.

### Description of preferred embodiments

The object of the present invention is solved by providing a simple procedure for a called party to redirect a calling party to the voice mail system related to the telephone number of the called party.

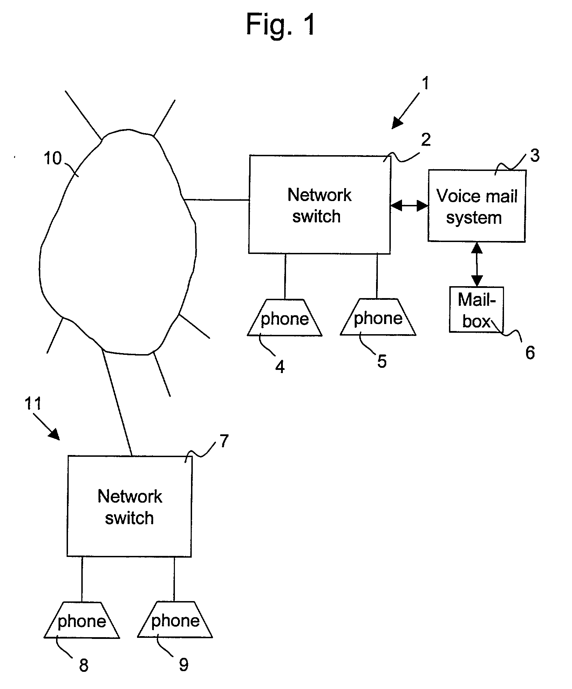

Figure 1 shows a schematic layout of a telephone network 1 in which the system and method of the present invention are applied. This local network 1 a network switch 2 according to the present invention, a voice mail system 3, a plurality of telephone devices 4, 5. In the local network 1, the network switch 2 is connected to the voice mail system 3, and to the plurality of telephone devices 4, 5. The voice mail system 3 comprises a plurality of mailboxes of which one mailbox 6 is shown. Through a wide area network 10, the network switch 2 may be connected to other local networks comprising another network switch. As an example, a second local network 11 comprising a network switch 7, and a plurality of telephone devices 8, 9 one is shown.

The network 1 may be any type of telecommunications network such as a PSTN network, a private ISDN network, a wireless network, or a combination thereof. The network switch 2 may be of any type known to persons skilled in the art and comprises means for signal processing and means for switching incoming and outgoing calls over the connections of the switch. The voice mail system 3 is shown here as a box separated from network switch 2 and may be located at a remote location, but it may also be incorporated in the network switch 2. The mailboxes of the voice mail system 3 are related to the subscriber numbers of the plurality of telephone devices 4, 5 connected to the network switch 2. Of the plurality of mailboxes only one mailbox 6, related to the telephone device 4, is shown in Figure 1.

It is assumed that the user of telephone device 4 is absent. A calling party using another telephone, connected to the same network switch 2, or to another network switch 7, calls the telephone device 4. The call is answered on that telephone 4 by a person, who becomes aware during his conversation with the calling party that the message of the calling party must be recorded for the absentee.

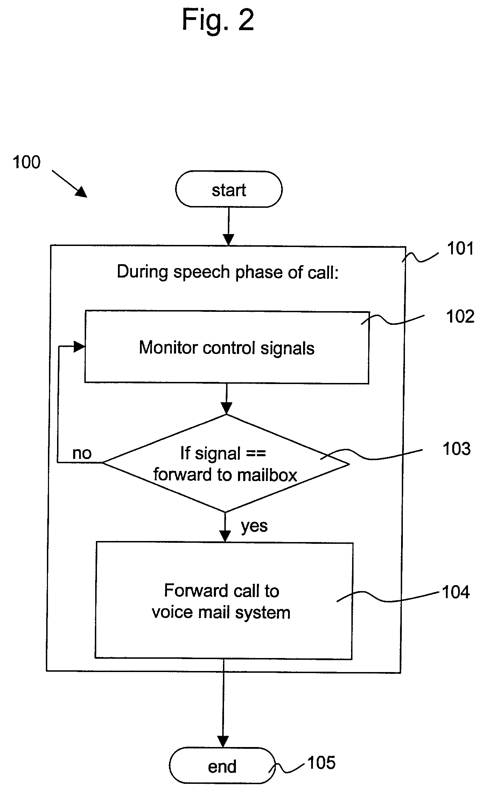

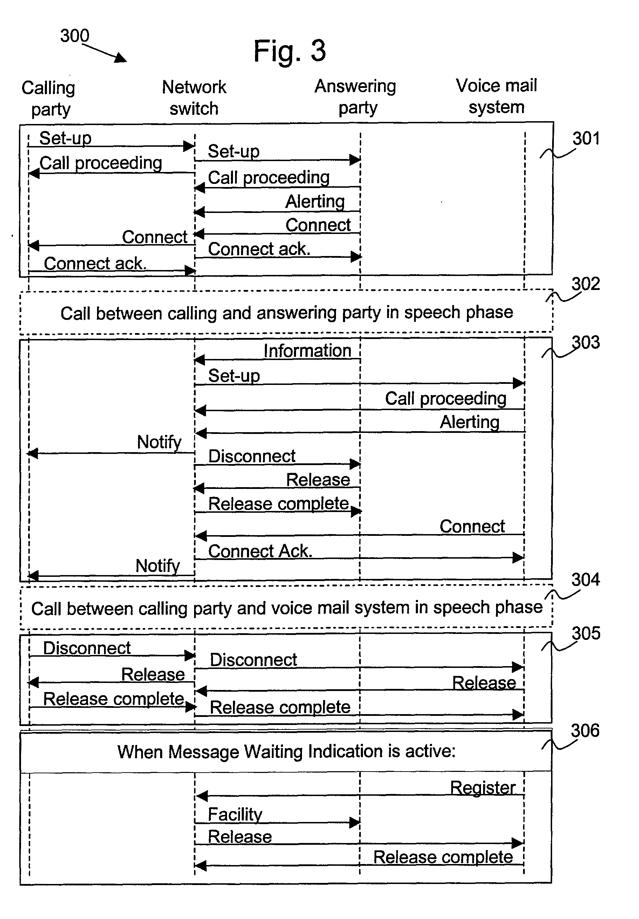

In the present invention, the network switch 2 is programmed to forward the call, while in speech phase, to the voice mail system for recording the message of the calling party. The call forwarding by the answering party is achieved by entering a simple code on the keypad of the answering party's telephone 4, in stead of the more complicated procedure from the prior art as described above. During the speech phase of the phone call to the answering party's telephone 4, the network switch 2 monitors the connection for a control signal, which is generated by the keypad code entered by the answering party. After receiving this control signal for forwarding to the voice mail system 3, the network switch 2 processes the control signal to extract information about which telephone 4 requests the forwarding to the voice mail system 3. Then the network switch 2 reconnects the calling party's telephone to the voice mail system 3: the network switch 2 disconnects the connection between the answering party's telephone 4 and the calling party's telephone, and establishes a connection between the calling party's telephone and the voice mail system 3. The voice mail system 3 receives the call from the calling party, as if the call was forwarded directly without the preceding speech phase connection with the telephone of the answering party 4. The network switch 2 provides the necessary information to the voice mail system 3 to record the message from the calling party in the mailbox 6, related to the subscriber number of the answering party's telephone 4. The voice mail system 3 handles the calling party's call in a manner as known from the prior art. The procedure of forwarding the call to the voice mail system 3 by a simple keypad code is explained below with reference to figures 2 and 3.

The forwarding procedure by entering a keypad code on the keypad of telephone 4 can be arranged in various conceivable ways. For example, the keypad code may comprise a DTMF code, an ISDN facility/info message or a PSTN hook flash code. Such codes may be implemented by a single function key (or a short key sequence) on the keypad of the answering party's telephone 4.

Figure 2 shows a schematic flow diagram of a procedure 100 to be carried out by processing means of the network switch 2 to forward a phone call to a voice mail system 3 during speech phase.

In step 101, the connection between the calling party's telephone and telephone 4 is in speech phase.

During the speech phase, in step 102, the signal processing means of the network switch 2 monitor the signals transmitted over the connection for control signals. Monitoring is done continuously. When the network switch receives a control signal, the procedure continues in step 103.

In step 103 the processing means of the network switch 2 checks if a received control signal corresponds to the specific signal, originated by the keypad code, to forward the current call to the voice mail system 3. If not, monitoring continues in step 102, else the procedure continues in step 104.

In step 104, the signal processing means of the network switch 2 extracts information from the received control signal and the related port- and subscriber-data to determine for which subscriber number related to the answering party's telephone the voice mail system 3 must record a message. Then, the network switch 2 redirects the current call. The connection between the calling party's telephone and the answering party's telephone 4 is disconnected, and the calling party's telephone is connected to the voice mail system 3, which will handle the call further in a way as known to persons skilled in the art.

The procedure ends in step 105, when the call between the calling party's telephone and the answering party's telephone 4 is discontinued (or when the call has been forwarded to the voice mail system 3).

Figure 3 shows a schematic signalling flow to illustrate the method of the present invention in an embodiment using the implementation with ISDN messages.

Figure 3 displays a flow diagram in a format as used in the European Standard (Telecommunications series) EN 300 367 (v.1.2.1) of the European telecommunications Standards Institute (ETSI) for ISDN explicit call transfer services.

In this diagram the communicating entities: i.e. the calling party's phone, the network switch 2, the answering party (telephone 4) and the voice mail system 3 are shown in a horizontal row. Connections between the respective entities are depicted by their respective horizontal lines. Vertically from top to bottom, the signal transfers between the respective communicating entities are shown as a function of time. The flow diagram shows an exemplary signalling flow according to the system and method of the present invention.

In step 301, the calling party dials the destination number of the telephone 4 (of the answering party to be). A SET-UP signal is generated and sent to the network switch 2. This signal may be originated by a calling party associated with a telephone 5 connected to the same network switch 2, or with a telephone 8, 9 connected to another network switch 7. In the latter case the SET-UP signal is received through the network switch 7.

Next, the network switch processes the SET-UP signal by transmitting a SET-UP signal to the telephone 4 (the answering party). The network switch 2 transmits a CALL PROCEEDING signal to the telephone of the calling party.

Successively, the answering party's telephone 4 responds to the SET-UP signal from the network switch 2 by transmitting as a first signal a CALL PROCEEDING signal, as a second signal an ALERTING signal. As soon as the phone is picked up by the answering party, the answering party's telephone 4 transmits a CONNECT signal as a third signal.

After receiving the CONNECT signal from the answering party's telephone 4, the network switch 2 transmits a CONNECT signal to the calling party's phone. Next, the network switch 2 transmits a CONNECT ACKNOWLEDGE signal to the answering party's telephone 4. The calling party's telephone transmits a CONNECT ACKNOWLEDGE signal to the network switch 2.

Now the connection between the calling party and the answering party is established. The call is in speech phase, depicted by block 302.

During the speech phase 302, the answering party wants to forward the call to the voice mail system 3.

In step 303, the answering party enters the keypad code on the answering party's telephone 4. The answering party's telephone 4 transmits an INFORMATION signal, comprising the request to forward the call to the voice mail system 3, to the network switch 2.

The network switch 2 receives the INFORMATION signal and transmits a SET-UP signal to the voice mail system 3. This SET-UP signal comprises information related to the answering party's telephone number 4, and, possibly, the calling party's phone number.

The voice mail system 3 receives the SET-UP signal and responds by sending a CALL PROCEEDING signal, followed by an ALERTING signal, to the network switch 2. At this stage the voice mail system 3 may (concurrently) process the information comprised in the SET-UP signal to select the mailbox 6 associated with the telephone 4 of the answering party.

After receiving the CALL PROCEEDING and ALERTING signals from the voice mail system 3, the network switch 2 transmits a NOTIFY signal to the calling party's phone. Successively, the voice mail system 3 transmits a CONNECT signal to the network switch 2. The network switch receives this signal and responds by sending a CONNECT ACKNOWLEDGE signal to the voice mail system 3.

Upon the CONNECT, the answering phone 4 looses the connection to the calling party. Using the known message protocol, the network switch handles the disconnection independently from establishing the connection between the calling party and the voice mail system 3 : the network switch 2 sends a DISCONNECT signal to the answering party's phone 4. The answering party's telephone 4 responds to the DISCONNECT signal by sending a RELEASE signal in order to release the line to the network switch 2. The network switch 2 receives the RELEASE signal and transmits a RELEASE COMPLETE signal to the telephone 4 of the answering party. The connection between the network switch 2 and the answering party's telephone 4 is now disconnected.

Next, after sending the CONNECT ACKNOWLEDGE signal to the voice mail system 3, the network switch 2 sends a second NOTIFY signal to the calling party's phone in order to notify the connection to the voice mail system 3 has been established.

Now the connection between the calling party and the voice mail system 3 is established. The call is in speech phase, depicted by block 304.

In step 305, the connection between the calling party's phone and the voice mail system 3 is disconnected.

The calling party disconnects the line. The network switch 2 receives a DISCONNECT signal from the calling party's phone. The network switch 2 transmits a DISCONNECT signal to the voice mail system 3. As a response from the voice mail system 3, the network switch 2 receives a RELEASE signal and transmits a RELEASE COMPLETE signal to the voice mail system 3.

Concurrently, a RELEASE signal is transmitted by the network switch 2 to the calling party's phone. The calling party's phone transmits a RELEASE COMPLETE signal to the network switch 2. All connections between the communicating entities are now disconnected.

In case the answering party's telephone 4 is arranged to have a Message Waiting Indication which notifies the telephone user of messages recorded on the voice mail system 3, an additional procedure is executed in step 306 to finish the call. The network switch 2 receives a REGISTER signal from the voice mail system 3 to signal a recorded message is waiting for the telephone 4 of the answering party. The network switch 2 processes the information in the REGISTER signal, and transmits a FACILITY signal to the telephone 4 of the answering party. The FACILITY signal sets an indication on the answering party's telephone 4 to indicate a message is waiting on the voice mail system 3. Next, the network switch 2 sends a RELEASE signal to the voice mail system 3. In response, the network switch 2 receives a RELEASE COMPLETE signal from the voice mail system 3.

It will be appreciated by persons skilled in the art, that the procedure as shown in Figure 3 for an ISDN network, also can be implemented for another type of telecommunications network such as a PSTN network, by using a suitable control signal in the keypad code for forwarding a call to a voice mail system. Also, an implementation in a wireless telecommunications network may be possible by using a keypad code on a mobile telephone. As known, these implementations may differ in the handling of the signals as used between the communicating entities.

## Claims

1. Telecommunications system (1) comprising a network switch (2), a voice mail system (3), a plurality of telephone devices (4, 5), said network switch (2) being arranged to communicate with said plurality of telephone devices (4, 5), said voice mail system (3), and other network switches (7); said network switch (2) being arranged to switch incoming and outgoing phone calls; said voice mail system (3) being arranged to register messages from incoming phone calls in a mailbox (6) related to a specific telephone device (4) of said plurality of telephone devices (4, 5) if a call forwarding option is enabled on said telephone device (4); said network switch being arranged to forward an incoming phone call for said telephone device (4) to said voice mail system (3), before entering a speech phase for said incoming phone call with said telephone device (4), if said call forwarding option is enabled; **characterised in that** said telephone device (4) is arranged to generate a control signal for forwarding said incoming phone call for said telephone device (4) to said voice mail system (3) during said speech phase of said incoming phone call with said telephone device (4);
said network switch (2) is arranged to forward said incoming phone call for said telephone device (4) to said voice mail system (3) during said speech phase by carrying out the following steps:
- to monitor during said speech phase the occurrence of said control signal for forwarding said incoming phone call for said telephone device (4) to said voice mail system (3);
- upon reception of said control signal:
• to extract information about the identity of said telephone device (4) from said control signal;
• to disconnect said incoming phone call from said telephone device (4);
• to transmit a signal to said voice mail system (3) comprising said information about said identity of said telephone device (4); and
• to redirect said incoming phone call to said mailbox (6) related to said telephone device (4), using said information about said identity of said telephone device (4).

2. Telecommunications system (1), according to claim 1, **characterised in that** said telephone device is arranged to generate said control signal for forwarding said incoming phone call for said telephone device (4) to said voice mail system (3) when a keypad code is entered on said telephone device (4) by a person using said telephone device (4).

3. Telecommunications system (1), according to claims 1 or 2, **characterised in that** said control signal comprises a signal compatible with a PSTN network switch, an ISDN network switch or a network switch in a wireless network.

4. Telecommunications system (1), according to any preceding claim, **characterised in that** said information about said identity of said telephone device (4) comprises related port- and subscriber-data.

5. Method to forward an incoming phone call to a voice mail system (3) in a telecommunications system (1) according to claim 1, **characterised in that** the method comprises the following steps:
- to generate by said telephone device (4) during said speech phase of said incoming phone call, a control signal for forwarding said incoming phone call for said telephone device (4) to said voice mail system (3);
- to forward by said network switch (2) said incoming phone call for said telephone device (4) to said voice mail system (3) during said speech phase in accordance to the following steps:
• to monitor during said speech phase the occurrence of said control signal for forwarding said incoming phone call for said telephone device (4) to said voice mail system (3);
• upon reception of said control signal:
- to extract information about the identity of said telephone device (4) from said control signal;
- to disconnect said incoming phone call from said telephone device (4);
- to transmit a signal to said voice mail system (3) comprising said information about said identity of said telephone device (4); and
- to redirect said incoming phone call to said mailbox (6) related to said telephone device (4), using said information about said identity of said telephone device (4).

6. Method according to claim 5, **characterised by** the following step:
- to generate by said telephone device (4) said control signal for forwarding said incoming phone call for said telephone device (4) to said voice mail system (3) when a keypad code is entered on said telephone device (4) by a person using said telephone device (4).

7. Method according to claim 5 or 6, **characterised in that** said control signal comprises a signal compatible with a PSTN network switch, an ISDN network switch or a network switch in a wireless network.

8. Method according to any preceding claim, **characterised in that** said information about said identity of said telephone device (4) comprises related port- and subscriber-data.

9. Network switch (2) for a telecommunications system (1) according to claim 1, **characterised in that** said network switch (2) is arranged to forward said incoming phone call for said telephone device (4) to said voice mail system (3) during said speech phase by carrying out the following steps:
- to monitor during said speech phase the occurrence of said control signal for forwarding said incoming phone call for said telephone device (4) to said voice mail system (3);
- upon reception of said control signal:
• to extract information about the identity of said telephone device (4) from said control signal;
• to disconnect said incoming phone call from said telephone device (4);
• to transmit a signal to said voice mail system (3) comprising said information about said identity of said telephone device (4); and
• to redirect said incoming phone call to said mailbox (6) related to said telephone device (4), using said information about said identity of said telephone device (4).

10. Network switch (2) according to claim 9, **characterised in that** said control signal comprises a signal compatible with a PSTN network switch, an ISDN network switch or a network switch in a wireless network.

11. Network switch (2), according to any preceding claim, **characterised in that** said information about said identity of said telephone device (4) comprises related port- and subscriber-data.
